# FASCICULE DE BREVET EUROPEEN

(11) **EP 3 049 224 B1**
(45) Date de publication et mention de la délivrance du brevet: **15.11.2017**
(21) Numéro de dépôt: 14796802.8
(22) Date de dépôt: 25.09.2014
(51) Int. Cl.: B29B 15/12, B29C 31/06

(54) **INSTALLATION ET PROCÉDÉ D'IMPRÉGNATION PAR TRANSFERT D'UNE POUDRE DANS UN SUPPORT POREUX**
VORRICHTUNG UND VERFAHREN ZUR IMPRÄGNIERUNG DURCH ÜBERTRAGEN EINES PULVERS IN DAS INNERE EINES PORÖSEN SUBSTRATES
APPARATUS AND METHOD FOR IMPREGNATION BY TRANSFERRING A POWDER INTO A POROUS SUBSTRATE

(30) Priorité: 26.09.2013 FR 1359315
(43) Date de publication de la demande: 03.08.2016
(73) Titulaire: Fibroline, 69130 Ecully (FR)
(72) Inventeur: MARDUEL, Joric, F-69380 Chazay D'azergues (FR)
(74) Mandataire: Cabinet Laurent & Charras
(86) Numéro de dépôt international: PCT/FR2014/052421
(87) Numéro de publication internationale: WO 2015/044605

(56) Documents cités:
- DE-A1-102004 046 745
- FR-A1- 2 589 783
- FR-A1- 2 933 327
- US-A- 2 808 098

## Description

### DOMAINE DE L'INVENTION

La présente invention se rapporte au domaine de l'imprégnation de supports poreux par des matériaux pulvérulents. Par le terme « support poreux », on entend un matériau comportant des porosités, susceptibles d'accueillir de la matière pulvérulente. Il peut notamment s'agir de réseaux fibreux, comme par exemple un non tissé ou un tissu, un papier, voire une mousse à cellules ouvertes.

### ETAT ANTERIEUR DE LA TECHNIQUE

L'imprégnation d'un support poreux par un matériau pulvérulent ou poudre, permet de façon avantageuse de modifier ses propriétés. En effet, un même support peut être utilisé dans différents domaines d'activités en fonction de la nature de la poudre l'imprégnant. Par exemple, l'imprégnation d'un support par une poudre contenant un principe actif anti-bactérien est utilisé dans le milieu médical comme pansement, alors que le même support imprégné d'une poudre super-absorbante est employé dans la réalisation de couches culottes.

Le document FR 2 933 327 décrit un exemple d'installation permettant l'imprégnation d'une poudre présente sur un support poreux, par application d'un champ électrique alternatif sur le support ayant préalablement reçu une quantité de poudre sur sa surface. Les grains de poudre sont déplacés dans l'épaisseur du support par application d'un champ électrique alternatif sensiblement perpendiculaire au support.

La poudre est déposée sur le support par une technique de saupoudrage, par cylindre doseur. Au contact du support, une partie des grains de poudre rebondit sur le support et forme un nuage de matière en suspension au niveau de la zone de dépôt, susceptible de se déposer en dehors de la zone souhaitée sur le support. Des poudres trop fines ou trop légères peuvent ne pas se déposer sur le support du fait de leur trajet entre le réservoir les délivrant et le support. La technique de saupoudrage présente donc des risques élevés de dispersion de la poudre dans l'environnement extérieur, une précision de dépôt limitée et des pertes de matière non négligeable.

Ces phénomènes sont amplifiés lorsque le support se déplace par rapport au système de mise en mouvement de la poudre. En effet, le déplacement du support génère des phénomènes de perturbations aérodynamiques au niveau de sa surface favorisant le déplacement du nuage de poudre. Plus le support défile rapidement, plus la poudre à tendance à être mise en mouvement au-dessus du support. Il est alors nécessaire de trouver un compromis entre la vitesse de défilement et la précision du dépôt de poudre.

Une fois la poudre déposée, une seconde étape consiste à favoriser l'imprégnation de la poudre dans le textile. Pour cela différentes techniques peuvent être employées. De manière générale, ces techniques consistent à déplacer la poudre dans le textile par l'intermédiaire d'un dispositif mécanique, pneumatique, électrostatique, etc. Lors de cette excitation, une partie de la poudre est mise en suspension au-dessus du textile. Les inconvénients mentionnés ci-dessus sont alors de nouveaux reproduits.

Les document US 2 808 098, FR 2 589 783 et DE 10 2004 046745 divulguent également une installation d'imprégnation d'un support poreux par transfert de poudre. La présente demande vise à proposer une installation d'imprégnation d'une poudre dans un support poreux, permettant un dépôt plus précis éventuellement selon un motif et une vitesse de production plus rapide, tout en limitant le risque de dissémination dans l'environnement de la poudre imprégnant ledit support.

### EXPOSE DE L'INVENTION

La présente invention concerne un dispositif d'imprégnation par transfert, d'un matériau pulvérulent ou poudre dans un matériau poreux, permettant de limiter la dissémination de la poudre dans l'environnement.

Pour résoudre un tel problème, le Demandeur propose une installation d'imprégnation d'un support poreux par transfert de poudre, comprenant une zone de stockage de la poudre, et un convoyeur sans fin apte à être entrainé en mouvement et présentant une face externe comportant des cavités.

L'invention se caractérise en ce que la face externe du convoyeur délimite un bord de la zone de stockage, de manière à remplir lesdites cavités avec la poudre. Par ailleurs, cette installation comprend un moyen de positionnement permettant de maintenir le support poreux en contact avec une fraction de la longueur du convoyeur, de manière à obturer des cavités contenant la poudre sur cette fraction de longueur du convoyeur. L'invention comprend également un dispositif d'entrainement permettant la mise en mouvement du convoyeur et du support poreux, et un moyen de déplacement de la poudre est agencé en vis-à-vis de ladite fraction de la longueur du convoyeur, pour déplacer au moins une partie de la poudre dans le support poreux.

Le moyen de positionnement du support permet à celui-ci de recouvrir les cavités du convoyeur contenant la poudre avant, pendant et éventuellement après leur transfert et imprégnation dans ledit support. De cette façon, la poudre est confinée entre le convoyeur et le support au moins jusqu'à son transfert à l'intérieur du support. Le moyen de positionnement peut par exemple comporter au moins un élément d'embarrage ou des rouleaux de renvoi d'angle disposés de part et d'autre du convoyeur. Le placage du support sur le convoyeur peut également être obtenu par un mécanisme de mise sous tension du support, entre une zone de dévidage et de bobinage du support poreux.

Ce confinement de la poudre entre le support poreux et le convoyeur permet de façon avantageuse de limiter la mise en suspension de la poudre dans l'environnement, puisque la poudre n'a pas à se déplacer dans une lame d'air lors de son transfert sur le support poreux et/ou lors du déplacement du support poreux avant son imprégnation. Ainsi, une quantité très faible de poudre est disséminée dans l'environnement lors de ces étapes, ce qui rend le transfert plus précis et plus économique en matière.

Bien entendu, afin de limiter le plus possible la dissémination de la poudre dans l'environnement, le moyen de positionnement peut être conçu pour que le support recouvre le convoyeur le plutôt possible en aval de la zone où la poudre est déposée dans les cavités. Il est également possible de faire en sorte que la zone de stockage par laquelle est délivrée la poudre soit disposée au plus près de la zone où le support poreux est mis en contact du convoyeur.

Un autre avantage de l'invention est de permettre le confinement de la poudre pendant son imprégnation dans le support poreux. Cette étape d'imprégnation nécessite la mise en mouvement des grains de poudre par le moyen de déplacement. Grâce à l'invention, la poudre en déplacement est confinée entre le support poreux et la face externe du convoyeur. Evidemment, le support poreux peut être maintenu en contact avec la face externe du convoyeur jusqu'à ce que la quantité de poudre en suspension dans lesdites cavités soit nulle ou négligeable. Là encore, l'invention permet de limiter la dissémination de la poudre dans l'environnement, de sorte que l'imprégnation est ainsi plus précise avec un taux de perte de matière bien moindre.

Le moyen de déplacement de l'installation permet la mise en mouvement du support poreux et du convoyeur à la même vitesse. Le convoyeur et le support peuvent être mis en mouvement par des moyens indépendants mais synchrones. D'autres configurations sont possibles. Ainsi par exemple, le convoyeur peut être déplacé par l'intermédiaire du dispositif de déplacement, le convoyeur entrainant par frottement le déplacement du support poreux. Bien entendu, la configuration inverse est possible. Il est préférable que le support poreux et le convoyeur se déplacent à la même vitesse pour permettre un dépôt de poudre, contenu dans une cavité, sur une surface du support correspondant précisément aux dimensions de l'ouverture de ladite cavité. De cette façon, la répartition de poudre sur le support poreux correspond précisément à la répartition des cavités sur le convoyeur. Il est ainsi possible de déposer la poudre sur le support poreux selon un motif géométrique voulu.

Selon un autre exemple, le moyen de déplacement de l'installation peut mettre en mouvement le convoyeur et le support poreux par des moyens indépendants et asynchrones. Le support poreux peut ainsi glisser sur le convoyeur, de manière à permettre le dépôt de la poudre sur des surfaces du support plus grandes par rapport aux dimensions des ouvertures des cavités, en fonction du différentiel de vitesse entre le support et le convoyeur.

La face externe du convoyeur peut comporter des portions de surface sans cavité, pour déposer et imprégner la poudre dans le support selon un motif souhaité. En d'autres termes, les cavités peuvent former un motif sur la face externe du convoyeur qui permet d'imprégner une zone spécifique du support, en laissant le reste de la surface peu ou pas imprégnée. On évite ainsi les pertes de matière pulvérulente lorsque le support poreux est ensuite destiné à être découpé selon une forme proche dudit motif.

L'installation d'imprégnation peut comprendre un moyen de raclage de la face externe du convoyeur pour enlever la poudre présente sur sa surface, avant le recouvrement par le support poreux des cavités contenant la poudre. En d'autres termes, le moyen de raclage permet de retirer la poudre présente entre les cavités, de sorte que le motif géométrique formé par les cavités soit précisément reproduit par la poudre sur le support poreux. Le moyen de raclage est de préférence positionné sur un bord de la zone de stockage, pour que la poudre sortant de ladite zone soit uniquement présente dans les cavités. Cela permet de façon avantageuse d'économiser la poudre dans la zone de stockage.

L'invention permet également de contrôler avec précision la quantité de poudre déposée et imprégnée dans le support poreux. En effet, le volume des cavités et leur nombre permettent de connaître précisément les positions et les quantités de poudre imprégnées dans le support. Eventuellement, la quantité de poudre présente dans les cavités peut être modifiée en fonction de l'entrefer entre le convoyeur et le moyen de raclage, ou de la pression par laquelle le moyen de raclage est plaqué sur le convoyeur.

Le convoyeur de l'installation assurant le déplacement de la poudre peut être réalisé de diverses manières. Ainsi, il peut s'agir par exemple d'un convoyeur à bande, de préférence à bande souple, comme par exemple une bande en matière plastique de type « PVC ». Selon une alternative, le convoyeur peut être un convoyeur cylindrique et notamment de forme cylindrique rigide.

Le déplacement de la poudre dans le support poreux peut être réalisé de manière très variées. Ainsi, selon une technologie particulière, les moyens de déplacement de la poudre dans le support poreux peuvent comprendre un dispositif produisant un champ électrique alternatif sensiblement perpendiculaire à la face du convoyeur comprenant les cavités, afin de favoriser le déplacement des grains de poudre dans l'épaisseur du support. L'épaisseur du support poreux est ici définie selon une direction perpendiculaire à la face externe du convoyeur en contact avec ledit support. Plus précisément, le dispositif produisant le champ électrique alternatif peut comprendre au moins deux électrodes agencées de part et d'autre du support poreux. Le convoyeur cylindrique peut avantageusement former l'une de ces électrodes.

Selon une autre forme de réalisation, les moyens de déplacement peuvent également comprendre au moins un dispositif vibratoire générant des vibrations transmises au support poreux. De préférence, les vibrations sont appliquées sur le support poreux selon une direction sensiblement perpendiculaire à son épaisseur. L'invention concerne de multiples variantes de moyens permettant de générer ces vibrations. Ainsi, le dispositif vibratoire peut comprendre au moins un rouleau de section irrégulière et tournant, avec entrainement ou non, selon un axe sensiblement parallèle au support poreux. Par section irrégulière, on entend qu'il ne s'agit pas d'une forme de révolution ou que le contour de la section du rouleau ne forme pas un cercle.

Eventuellement, dans le cas où la poudre peut traverser toute l'épaisseur du support poreux, un dispositif de confinement de la poudre dans le support peut être agencé en dessous dudit support pour la récupérer. Il peut ainsi s'agir d'une bande transporteuse qui circule en dessous du support.

L'invention a également pour objet un procédé d'imprégnation d'un support poreux par de la poudre, dans lequel on utilise le principe décrit ci-avant d'un stockage d'une quantité de poudre dans des cavités venant en regard du support poreux. Ainsi de façon générale, il peut y avoir un intérêt à déposer la poudre dans les cavités d'un élément intermédiaire de transfert, dont la face présentant les cavités est mise au contact du support poreux, de manière à obturer les cavités contenant la poudre. Puis, la poudre est mise en mouvement dans les cavités pour favoriser son insertion dans le support obturant lesdites cavités.

Ce principe peut être mis en oeuvre de façon statique, c'est-à-dire en associant le support poreux et l'élément intermédiaire de transfert avant de soumettre l'ensemble à la mise en mouvement de la poudre, qui sort des cavités pour se répandre dans le support poreux lors d'une phase d'une durée fixée.

Ce même principe peut être exploité en continu, avec le défilement d'un support poreux associé à un élément intermédiaire de transfert à l'intérieur d'une section de machine de traitement où s'effectue la mise en mouvement de la poudre. Avantageusement, l'élément intermédiaire de transfert peut être formé par un convoyeur qui collecte en continu la poudre depuis une zone de stockage, comme décrit plus haut.

### DESCRIPTION DES FIGURES

L'invention sera mieux comprise à la lecture de la description qui suit, donnée uniquement à titre d'exemple indicatif et non limitatif, et réalisée en relation avec les dessins annexés, dans lesquels les mêmes références désignent des éléments identiques ou analogues :
- la figure 1 illustre une vue de coupe simplifiée d'un dispositif d'imprégnation selon l'invention ;
- les figures 2 et 3 sont des vues en coupe illustrant des variantes de réalisation du dispositif représenté sur la figure 1 ;
- la figure 4 illustre une vue de coupe simplifiée d'un autre mode de réalisation d'un dispositif d'imprégnation selon l'invention ;
- la figure 5 illustre une vue de coupe simplifiée d'une variante d'un dispositif d'imprégnation selon la figure 4.

### EXEMPLES DE REALISATION DE L'INVENTION

Pour rappel, la présente demande vise à proposer une installation d'imprégnation d'un support poreux par de la poudre, de façon plus rapide tout en limitant le risque de dissémination de la poudre lors de cette étape.

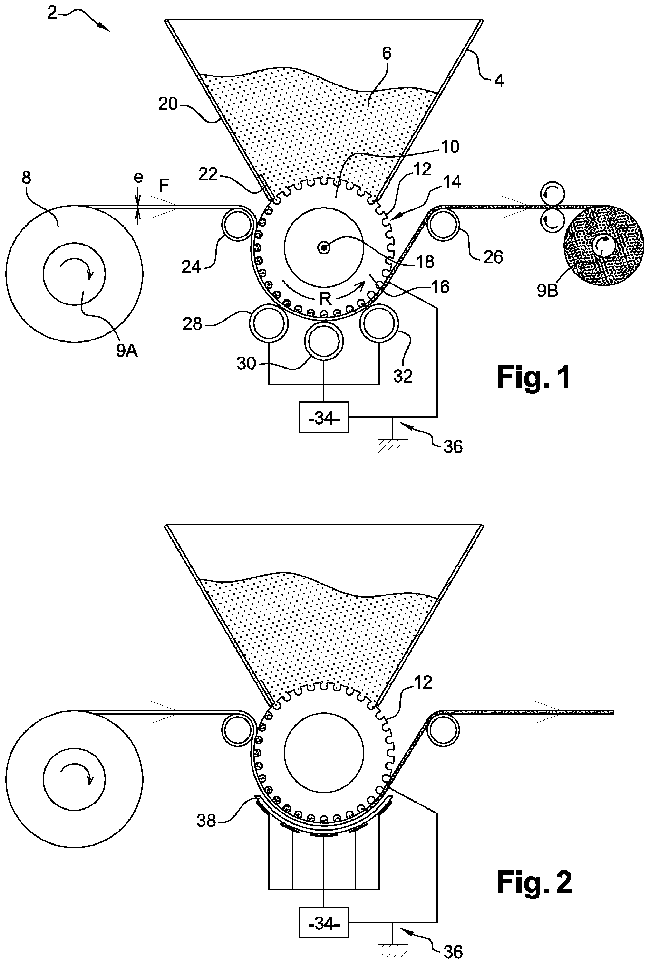

La figure 1 illustre un premier exemple d'installation d'imprégnation **2** selon l'invention. Cette installation comporte une zone de stockage, dans le cas présent une trémie **4,** contenant de la matière pulvérulente ou poudre **6** destinée à imprégner un support poreux **8.** Bien entendu, la granulométrie et la nature de la poudre peuvent être adaptées en fonction de la porosité et de la fonctionnalisation souhaitée du support poreux. De la même façon, la poudre peut intégrer différents constituants, en termes de composition chimique ou de granulométrie, et intégrer des adjuvants ou autres composés complémentaires destinés à conférer des propriété spécifiques à la poudre.

Le fond de la trémie **4** est obturé par la face supérieure **10** d'un convoyeur cylindrique **12** rigide, de manière à confiner la poudre dans la trémie. Le convoyeur cylindrique comporte une partie supérieure **10** au niveau de laquelle est déposée la poudre, et une partie inférieure **16** au niveau de laquelle le convoyeur est au contact du support poreux, sur un certain secteur angulaire. Le convoyeur cylindrique **12** pivote autour d'un axe **18** perpendiculaire au plan de la figure 1 selon le sens de la flèche R.

La surface du cylindre comporte plusieurs cavités **14** réparties par exemple de façon homogène le long de sa circonférence. Ces cavités **14** forment des zones en creux par rapport à la surface principale du convoyeur, à l'intérieur desquelles peut se loger de la poudre. Lorsque le convoyer défile devant la trémie **4,** la poudre **6** se déplace par gravité et remplit les cavités **14.** Une racle **22** est agencée entre le cylindre et le bord de la trémie **20** par lequel sort la poudre. La racle est disposée en vis-à-vis du cylindre pour retenir dans la trémie la poudre présente entre les cavités **14.** La racle peut adopter diverses configurations, telles qu'une bande de matériau polymérique léchant la surface du cylindre, ou d'une brosse dont les poils sont dirigés vers le cylindre. Dans ce cas, la distance entre la racle et la surface du cylindre est réglable pour permettre aux poils de la brosse de plus ou moins pénétrer dans les cavités pour évacuer une quantité contrôlée de poudre. De cette façon, la racle **20** permet de contrôler la quantité de poudre **6** sortant de la trémie **4,** et de limiter la présence de la poudre dans les cavités **14.**

La poudre contenue dans les cavités **14** est ensuite mise en contact du support poreux **8** lors du pivotement du convoyeur cylindrique **12.** Au moins une partie de la poudre contenue dans les cavités **14** est alors déposée par gravité sur le support poreux **8** selon l'agencement desdites cavités sur le convoyeur cylindrique **12.**

Un premier et un second cylindre de positionnement **24** et **26,** tous deux libres en rotation autour d'un axe perpendiculaire au plan de la figure 1, sont agencés parallèlement au convoyeur cylindrique **12** pour permettre au support poreux **8** de contourner ledit cylindre en prenant appui sur sa surface. Un dispositif d'entrainement non représenté sur la figure 1 permet de dérouler le support poreux à une vitesse nettement plus élevée, typiquement de 5 à 10 fois plus élevée par rapport à des machines traditionnelles, telles que celles décrites dans le brevet FR 2 933 327. Le support poreux se déplace selon la direction matérialisée par la flèche F sur la figure 1. Le support poreux est entraîné par un mécanisme d'enroulage **9A** et de déroulage **9B.** La rotation du convoyeur cylindrique **12** est réalisée par un mécanisme d'entrainement qui peut être synchronisé avec le déplacement du support poreux. Plus précisément, la surface du cylindre et du support poreux se déplacent à la même vitesse de sorte qu'une cavité **14** est en contact avec un même élément de surface du support poreux.

Le premier cylindre de positionnement **24** est placé en amont du convoyeur cylindrique **12,** au niveau de sa partie supérieure **10,** pour que le support poreux retienne la poudre **6** dans les cavités **14** lors de leur renversement. Les termes amont et aval sont définis par rapport à la direction de déplacement du support poreux. De cette façon, la hauteur de laquelle chute la poudre sur le support poreux est minime, et peu de grains de poudre sont alors mis en suspension lors du dépôt de la poudre sur le support poreux. De plus, la poudre est confinée dans les cavités **14** pendant ce transfert, limitant donc sa dispersion sur le support poreux ou dans l'environnement. De la sorte, la poudre reproduit ainsi parfaitement sur le support poreux l'agencement ou le motif géométrique formé par les cavités **14** sur le convoyeur cylindrique **12.**

Dans le cas où la poudre est volatile, il est avantageux de placer le premier cylindre **24** au plus proche de la trémie **4** pour que le support poreux recouvre les cavités **14** dès leur sortie de la trémie **4.** De cette façon, le support poreux confine la poudre et limite ainsi les risques de dissémination de la matière pulvérulente dans l'environnement.

Le deuxième cylindre de positionnement **26** est placé en aval du convoyeur cylindrique **12,** pour former un renvoi d'angle tout en maintenant le support poreux contre la partie inférieure **16** du cylindre lors de son imprégnation par la poudre **6.** De la sorte, la poudre est protégée des mouvements d'air susceptibles de la disperser sur le support poreux ou dans l'environnement. Les pertes de poudre sont donc moindres et la vitesse de déplacement du support poreux n'est plus un facteur fortement limitant dans le procédé d'imprégnation du support.

L'imprégnation de la poudre dans le support poreux est favorisée par l'utilisation d'un dispositif d'excitation, apportant à la poudre une énergie cinétique suffisante pour permettre une meilleure évacuation des cavités **14** et favoriser son déplacement dans l'épaisseur du support poreux **6.** L'épaisseur **e** du support est définie selon une direction perpendiculaire à la surface du convoyeur cylindrique lorsque le support est en contact avec celui-ci.

Le dispositif d'excitation est composé de trois électrodes tubulaires **28, 30** et **32,** agencées parallèlement et le long de la circonférence du convoyeur cylindrique **12.** Plus précisément, les électrodes sont positionnées au niveau de la partie inférieure **16** du cylindre à une distance comprise entre l'épaisseur **e** du support et 30 mm. Les électrodes sont connectées à une sortie unipolaire d'un générateur électrostatique à haute tension **34.** Le convoyeur cylindrique réalisé en un matériau conducteur, typiquement en métal, est connecté à la masse **36** du générateur pour former une contre-électrode. Le générateur est mis en marche lors du déplacement du support poreux pour créer au niveau des zones de contact entre la poudre et le support, un champ électrique alternatif dont la valeur est comprise entre 5 et 30kVolts. Ce champ électrique permet de charger électriquement les grains de poudre afin de les accélérer alternativement vers les électrodes opposées, avec une fréquence comprise entre quelques dizaines et quelques centaines de Hertz. La poudre migre ainsi progressivement dans l'épaisseur du support poreux. Les phénomènes de charges électriques des grains de poudre génèrent également une répulsion des grains entre eux, favorisant la migration et l'homogénéisation de la poudre dans le volume du support.

En fonction de la porosité du support et de la granulométrie de la poudre, le temps d'exposition à la source d'excitation et son niveau d'excitation peuvent être modifiés selon le degré d'imprégnation de la poudre souhaité dans le support. Par exemple, pour permettre une imprégnation plus profonde, la durée de l'excitation peut être allongée en augmentant le nombre d'électrodes agencées le long du cylindre de convoyage, ou bien tel qu'illustré à la figure 2 en remplaçant lesdites électrodes par une électrode continue **38** de forme concave et parallèle à la surface du convoyeur cylindrique. Bien entendu, la durée d'excitation de la poudre peut également être allongée en diminuant la vitesse de déplacement du support poreux.

L'utilisation de plusieurs électrodes tubulaires parallèles entre elles et de différentes sections, agencées le long de la partie inférieure du convoyeur cylindrique, est également une alternative possible pour déplacer la poudre dans le support poreux.

De préférence, les électrodes mentionnées ci-dessus sont recouvertes par un écran diélectrique, afin d'empêcher la formation d'arc électrique à leur surface et ainsi éviter leur vieillissement prématuré. Pour les mêmes raisons, la surface du convoyeur cylindrique peut également être recouverte par un écran de même nature. La valeur du champ électrique appliqué peut alors être augmentée en réduisant les risques de formation d'arcs électriques entre les électrodes. L'imprégnation de la poudre dans le support poreux peut ainsi être réalisée plus rapidement et/ou de façon plus profonde. Une configuration alternative combinerait une électrode cylindrique sur lequel serait monté un convoyeur isolant, présentant les cavités sur sa face externe.

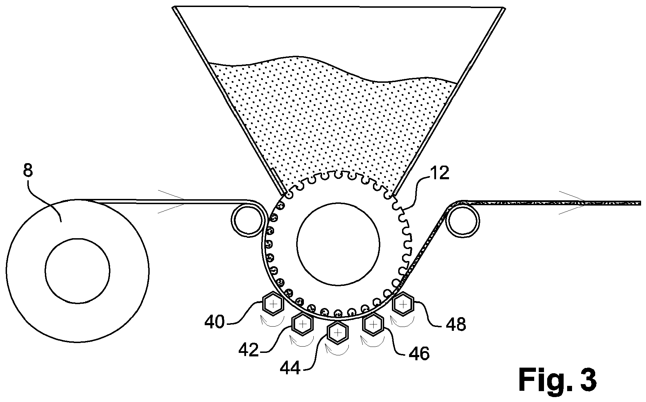

Bien entendu, les dispositifs d'excitation décrits ci-dessus peuvent être complétés ou substitués par d'autres dispositifs favorisant le déplacement de la poudre dans le support poreux. La figure 3 représente un exemple de dispositif d'excitation de type vibratoire, comprenant des barres **40, 42, 44, 46** et **48** libre en rotation de section polygonale, dont le diamètre est choisi en fonction de l'épaisseur du support poreux et de sa vitesse de défilement. Par exemple, les barres peuvent être de section hexagonale avec un diamètre compris entre 10 et 20 mm. Les barres sont agencées parallèlement au convoyeur cylindrique **12,** et suffisamment proches de sa surface pour permettre leur pivotement lors du passage du support poreux **8.** De la sorte, les barres appliquent une force de pression variable sur le support, générant des vibrations dans ledit support favorisant la migration de la poudre dans son épaisseur. Pour adapter la pression appliquée par les barres en fonction du support poreux et de la profondeur d'imprégnation de la poudre, d'autres modes de réalisation sont possibles en modifiant au moins une des caractéristiques suivantes : la distance entre les barres et la surface du cylindre, la forme des barres, leur vitesse de rotation, etc.

D'autres dispositifs d'excitation connus peuvent être envisagés pour favoriser l'imprégnation de la poudre dans le support poreux, comme par exemple des dispositifs de type acoustique, ultrasonique, aéraulique, pneumatique, etc.

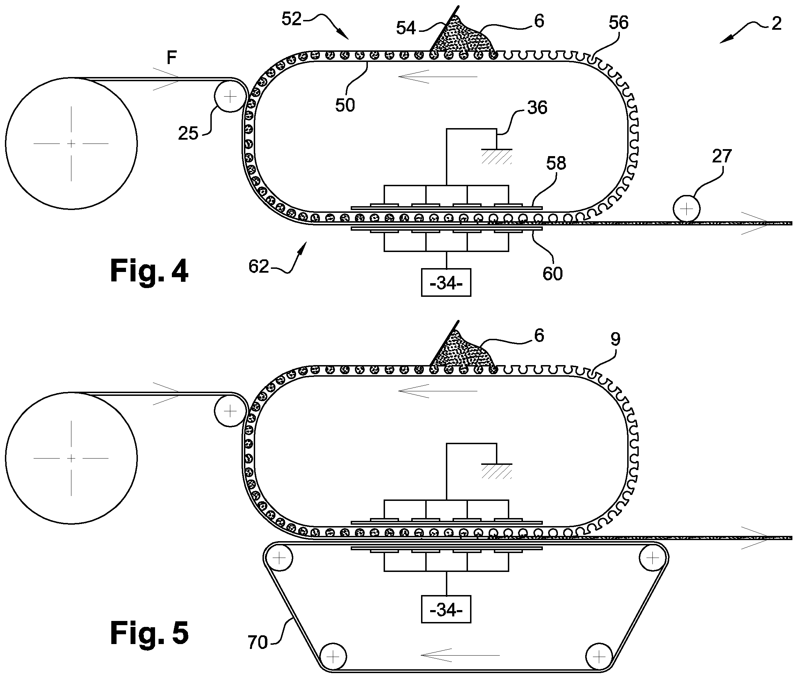

La figure 4 représente un autre mode de réalisation de l'invention se distinguant des exemples précédents par la substitution du convoyeur cylindrique **12** par un convoyeur à bande **50.** La bande du convoyeur est réalisée dans un matériau souple de type matière plastique et comprend des cavités aptes à stocker la poudre **6.** Il peut également s'agir d'un tissu dont l'armure définit les cavités qui reçoivent la poudre. La bande de convoyage comporte une partie supérieure **52** sur laquelle est appliquée la poudre **6.** Une racle **54** appliquée contre le convoyeur à bande permet de confiner et de contrôler la quantité de poudre présente dans les cavités **56.** Le convoyeur à bande a un rôle de dosage et de transfert de la poudre **6** depuis la racle jusqu'au dispositif d'excitation. De façon avantageuse, la bande du convoyeur permet d'adapter de façon plus souple le dispositif d'imprégnation à un dispositif d'excitation déjà existant. En effet, la longueur et le chemin de la bande peuvent être modifiés en fonction de l'agencement du dispositif d'excitation. Par exemple, le convoyeur à bande et les cylindres de positionnement **25** et **27** peuvent être positionnés pour que le support poreux en contact avec la partie inférieure **62** de ladite bande, passe dans un dispositif d'excitation formé par deux ensembles d'électrodes **58** et **60.** Ce type de dispositif d'excitation est par exemple décrit dans le document FR 2 933 327. Le fait que le convoyeur à bande **50** reste en contact avec le support poreux lors de son imprégnation, empêche la dissémination de la poudre sur le support et plus généralement dans le tunnel formé par les électrodes. De ce fait, l'imprégnation du support poreux s'effectue de façon plus précise et avec moins de perte de poudre. D'autre part, lors de cette étape d'imprégnation le convoyeur à bande **50** isole la poudre des perturbations aérodynamiques dues à des mouvements du support poreux, la vitesse de défilement du convoyeur à bande est beaucoup moins limitée par ce phénomène, et peut donc permettre des vitesses de production nettement supérieures à celles connues à ce jour.

Eventuellement, dans le cas où le support poreux est perméable à la poudre, une bande transporteuse **70** non perméable à ladite poudre, peut être agencée comme illustré à la figure 5, sous le support poreux **8** pour confiner ladite poudre lors de son déplacement dans le support.

En conclusion, l'invention propose plusieurs installations d'imprégnation de poudre dans un support poreux, permettant de façon avantageuse de confiner la poudre sur le support selon un motif régulier ou non, avant et pendant son imprégnation. Ainsi, les risques de dissémination dans l'environnement sont limités. L'imprégnation du support poreux peut alors être réalisée à plus haute vitesse, avec peu ou pas de perte de poudre.

## Revendications

1. Installation d'imprégnation (2) d'un support poreux (8) par transfert de poudre (6), comprenant :
- une zone de stockage (4, 54) de la poudre (6) ; et
- un convoyeur (12, 50) apte à venir au regard du support poreux et présentant une face externe comportant des cavités (14, 56) ;
**caractérisée en ce que**:
- la face externe du convoyeur délimite un bord de la zone de stockage de manière à remplir lesdites cavités avec la poudre (6) ; et
- un moyen de positionnement permet de maintenir le support poreux en contact avec une fraction de la longueur du convoyeur, de manière à obturer des cavités (14, 56) contenant la poudre (6) sur ladite fraction de longueur du convoyeur ; et
- un dispositif d'entrainement permet la mise en mouvement du convoyeur et du support poreux ; et
- un moyen de déplacement de la poudre est agencé en vis-à-vis de ladite fraction de la longueur du convoyeur, pour déplacer au moins une partie de la poudre dans le support poreux.

2. Installation d'imprégnation selon la revendication 1, **caractérisée en ce que** la face externe du convoyeur comporte des portions de surface sans cavité.

3. Installation d'imprégnation selon la revendication 1 ou 2, **caractérisée en ce qu'**il comprend un moyen de raclage (22) de la face externe du convoyeur pour enlever la poudre (6) présente en dehors des cavités (14, 56), avant le recouvrement par le support poreux (8) desdites cavités contenant de la poudre (6).

4. Installation d'imprégnation selon l'une des revendications 1 à 3, **caractérisée en ce que** le convoyeur est un convoyeur à bande (50).

5. Installation d'imprégnation selon l'une des revendications 1 à 3, **caractérisée en ce que** le convoyeur est un convoyeur cylindrique (12).

6. Installation d'imprégnation selon l'une des revendications 1 à 5, **caractérisée en ce que** le moyen de déplacement de la poudre dans le support poreux comprend un dispositif (12, 28, 30, 32, 34) produisant un champ électrique alternatif sensiblement perpendiculaire à la face du convoyeur (12).

7. Installation d'imprégnation selon la revendication 6, **caractérisée en ce que** le dispositif produisant un champ électrique alternatif comprend au moins deux électrodes agencées (12, 28, 30, 32) de part et d'autre du support poreux (8).

8. Installation d'imprégnation selon la revendication 7, **caractérisée en ce que** le convoyeur cylindrique (12) forme une des électrodes.

9. Installation d'imprégnation selon l'une des revendications 1 à 8, **caractérisée en ce que** le moyen déplacement de la poudre comprend au moins un dispositif vibratoire en contact avec le support poreux (8).

10. Installation d'imprégnation selon la revendication 9, **caractérisée en ce que** le dispositif de vibration comprend au moins un rouleau (40, 42, 44, 46, 48) de section irrégulière et tournant selon un axe sensiblement parallèle au support poreux (8).

11. Procédé d'imprégnation d'un support poreux par de la poudre, dans lequel on dépose la poudre dans les cavités présentes sur un élément intermédiaire de transfert, puis dans lequel le support poreux est mis au contact de l'élément intermédiaire de transfert de manière à obturer les cavités contenant la poudre, puis dans lequel la poudre est mise en mouvement dans les cavités pour favoriser son insertion dans le support obturant lesdites cavités.

12. Procédé selon la revendication 11, dans lequel l'élément intermédiaire de transfert et le support poreux sont en déplacement pendant la phase où la poudre est mise en mouvement.

13. Procédé selon la revendication 11, dans lequel l'élément intermédiaire de transfert et le support poreux sont immobiles pendant la phase où la poudre est mise en mouvement.

## Patentansprüche

1. Anlage zum Imprägnieren (2) eines porösen Trägers (8) durch Übertragung von Pulver (6), umfassend:
- einen Bereich zum Speichern (4, 54) des Pulvers (6); und
- einen Förderer(12,50), der zum porösen Träger geführt wird und eine Außenfläche aufweist, die Vertiefungen (14, 56) enthält.
**dadurch gekennzeichnet, dass:**
- Die Außenfläche des Förderers an eine Kante des Speicherbereichs grenzt, so dass diese Vertiefungen mit dem Pulver (6) gefüllt werden; und
- ein Positionsregler um den porösen Träger in Kontakt mit einem Teil der Förderbandlänge zu halten, so dass die Vertiefungen (14, 56), die das Pulver (6) enthalten, verschlossen werden; und
- eine Antriebsvorrichtung, mit dem der Förderer und das poröse Substrat bewegt werden können; und
- eine Verschiebevorrichtung vorgesehen ist, um das Pulver gegenüber diesem Teil der Förderbandlänge zu bringen, um zumindest einen Teil des Pulvers in den porösen Träger zu verschieben.

2. Imprägnieranlage gemäß Anspruch 1, **dadurch gekennzeichnet, dass** die Außenseite des Förderers Oberflächenteile ohne Vertiefung enthält.

3. Imprägnieranlage gemäß Anspruch 1 oder 2, **dadurch gekennzeichnet, dass** sie einen Abstreifer (22) für die Außenseite des Förderers enthält, um das Pulver (6), das sich außerhalb der Vertiefungen (14, 56) befindet, zu entfernen, bevor diese Pulver (6) enthaltenden Vertiefungen vom porösen Träger (8) abgedeckt werden.

4. Imprägnieranlage gemäß einem der Ansprüche 1 bis 3, **dadurch gekennzeichnet, dass** es sich bei dem Förderer um einen Gurtförderer (50) handelt.

5. Imprägnieranlage gemäß einem der Ansprüche 1 bis 3, **dadurch gekennzeichnet, dass** es sich bei dem Förderer um einen Walzen - Förderer (12) handelt.

6. Imprägnieranlage gemäß einem der Ansprüche 1 bis 5, **dadurch gekennzeichnet, dass** die Vorrichtung zum Verschieben des Pulvers in den porösen Träger eine Vorrichtung (12, 28, 30, 32, 34) enthält, die ein elektrisches Wechselfeld erzeugt, das deutlich senkrecht zur Förderervorderseite (12) ist.

7. Imprägnieranlage gemäß Anspruch 6, **dadurch gekennzeichnet, dass** die Vorrichtung die ein elektrisches Wechselfeld erzeugt, mindestens zwei Elektroden (12, 28, 30, 32) enthält, die beiderseits des porösen Trägers (8) angeordnet sind.

8. Imprägnieranlage gemäß Anspruch 7, **dadurch gekennzeichnet, dass** der Walzen - Förderer (12) eine dieser Elektroden bildet.

9. Imprägnieranlage gemäß einem der Ansprüche 1 bis 8, **dadurch gekennzeichnet, dass** die Vorrichtung zum Verschieben des Pulvers mindestens eine Vibrationsvorrichtung enthält, die Kontakt zum porösen Träger (8) hat.

10. Imprägnieranlage gemäß Anspruch 9, **dadurch gekennzeichnet, dass** die Vibrationsvorrichtung mindestens eine Walze (40, 42, 44, 46, 48) mit unregelmäßigem Querschnitt enthält, die sich um eine Achse deutlich parallel zum porösen Träger (8) dreht.

11. Verfahren zum Imprägnieren eines porösen Träger durch Pulver, bei dem das Pulver in Vertiefungen gefüllt wird, die sich in einem Zwischenelement zur Übertragung befinden, woraufhin der poröse Träger in Kontakt mit dem Übertragungs - Zwischenelement gebracht wird, so dass die das Pulver enthaltenden Vertiefungen verschlossen werden, woraufhin das Pulver in den Vertiefungen in Bewegung versetzt wird um sein Absetzen auf dem Träger, der diese Vertiefungen abdeckt, zu begünstigen.

12. Verfahren nach Anspruch 11, bei dem das Übertragungs - Zwischenelement und der poröse Träger sich während der Phase, in der das Pulver in Bewegung versetzt wird, verschieben.

13. Verfahren nach Anspruch 11, bei dem das Übertragungs-Zwischenelement und der poröse Träger sich während der Phase, in der das Pulver in Bewegung versetzt wird, unbeweglich sind.

## Claims

1. An installation for impregnating (2) a porous substrate (8) by transfer of powder (6), comprising:
- an area (4, 54) for storing the powder (6); and
- a conveyor (12, 50) capable of coming into contact with the porous substrate and having an external surface comprising cavities (14, 56);
**characterized in that**:
- the external surface of the conveyor delimits an edge of the storage area to fill said cavities with the powder (6); and
- positioning means enable to hold the porous substrate in contact with a fraction of the conveyor length, to seal cavities (14, 56) containing the powder (6) along said fraction of the conveyor length; and
- a drive device enables to move the conveyor and the porous substrate; and
- means for displacing the powder are arranged opposite said fraction of the conveyor length, to at least partly displace a portion of the powder across the porous substrate.

2. The impregnation installation of claim 1, **characterized in that** the external surface of the conveyor comprises cavity-free surface portions.

3. The impregnation installation of claim 1 or 2, **characterized in that** it comprises means (22) for scraping the external surface of the conveyor to remove the powder (6) present outside of the cavities (14, 56), before covering with the porous substrate (8) said cavities containing powder (6).

4. The impregnation installation of any of claims 1 to 3, **characterized in that** the conveyor is a belt conveyor (50).

5. The impregnation installation of any of claims 1 to 3, **characterized in that** the conveyor is a cylindrical conveyor (12).

6. The impregnation installation of any of claims 1 to 5, **characterized in that** the means for displacing the powder in the porous substrate comprise a device (12, 28, 30, 32, 34) generating an AC electric field substantially perpendicular to the surface of the conveyor (12).

7. The impregnation installation of claim 6, **characterized in that** the device generating an AC electric field comprises at least two electrodes (12, 28, 30, 32) arranged on either side of the porous substrate (8).

8. The impregnation installation of claim 7, **characterized in that** the cylindrical conveyor (12) forms one of the electrodes.

9. The impregnation installation of any of claims 1 to 8, **characterized in that** the means for displacing the powder comprise at least one vibration device in contact with the porous substrate (8).

10. The impregnation installation of claim 9, **characterized in that** the vibration device comprises at least one roller (40, 42, 44, 46, 48) of irregular cross-section and rotating around an axis substantially parallel to the porous substrate (8).

11. A method of impregnating a porous substrate with powder, wherein powder is deposited in the cavities present on an intermediate transfer element, and wherein the porous substrate is then placed into contact with the intermediate transfer element to seal the cavities containing the powder, and wherein the powder is then moved in the cavities to favor the insertion thereof into the substrate sealing said cavities.

12. The method of claim 11, wherein the intermediate transfer element and the porous substrate are moving during the phase where the powder is moved.

13. The method of claim 11, wherein the intermediate transfer element and the porous substrate are motionless during the phase where the powder is moved.
